# EUROPEAN PATENT SPECIFICATION

(11) **EP 2 658 302 B1**
(45) Date of publication and mention of the grant of the patent: **15.11.2017**
(21) Application number: 13158980.6
(22) Date of filing: 13.03.2013
(51) Int. Cl.: H04W 12/08, H04W 4/20, G07C 9/00

(54) **Method, apparatus, and system for password control**
Verfahren, Vorrichtung, und System zur Passwortsteuerung
Procédé, appareil et système de contrôle de mot de passe

(30) Priority: 15.03.2012 CN 201210068944
(43) Date of publication of application: 30.10.2013
(73) Proprietor: Huawei Device (Dongguan) Co., Ltd., Dongguan, Guangdong, PRC, 523808 (CN)
(72) Inventor: Wang, Zejiang, Guangdong 518129 (CN)
(74) Representative: Körber, Martin Hans

(56) References cited:
- EP-A1- 1 568 834
- US-A1- 2007 296 545
- US-A1- 2010 306 549
- US-A1- 2011 311 052

## Description

### FIELD OF THE INVENTION

The present invention relates to the field of password technologies, and in particular, to a method, an apparatus, and a system for password control.

### BACKGROUND OF THE INVENTION

At present, commonly used combination lock systems include a mechanical combination lock, an electronic combination lock, and a fingerprint combination lock. When a user uses these combination lock systems, the user enters a password by using an external keyboard or a fingerprint collector; after an information processing unit in a combination lock system receives the entered password, the information processing unit matches the entered password with a preset password; if the entered password matches the preset password, the information processing unit performs unlock processing.

However, password input apparatuses adopted by the combination lock systems in the prior art, for example, external keyboards or fingerprint collectors, have the following problems: Most of the apparatuses are exposed, so that passwords are easily peeped; after the apparatuses are used, there are tracks, which are easily recorded and cracked; so the security of entering passwords is relatively low.

US 2007 0296545 A1 discloses a lock system having a remote actuating key device and a passive lock device for receiving that signal. The control circuit receives the wireless signal, which powers it and determines if the wireless signal is appropriate to unlock the lock, whereupon it produces a trigger signal. The trigger mechanism is responsive to the trigger signal to actuate and enable the lock device to be opened. The key device is also arranged to communicate via a wireless communications connection to a computer network. The communication with the computer network may carry commands and information. The key device may relay communications between the lock device and the computer network.

### SUMMARY OF THE INVENTION

Embodiments of the present invention provide a method, an apparatus, and a system for password control to enhance the security of entering passwords.

To achieve the preceding objectives, embodiments of the present invention use the following technical solutions:

In one aspect, a method for password control is provided, including:
pre-allocating, by a combination lock, a network address to a mobile terminal;
   receiving, by the combination lock, an account and a login password sent by the mobile terminal through a network by using a pre-allocated network address;
when the account and the login password match an account and a login password pre-allocated to the mobile terminal, sending, by the combination lock, prompt information for inputting an unlock password to the mobile terminal;
receiving, by the combination lock, the unlock password that is sent by the mobile terminal through the network;
matching, by the combination lock, the unlock password with an unlock password preset for the mobile terminal; and
when the unlock password matches the unlock password preset for the mobile terminal, executing, by the combination lock, an unlock operation.

In another aspect, a method for password control is provided, including:
receiving a network address which is pre-allocated by a combination lock to a mobile terminal;
receiving, by the mobile terminal, an account and a login password entered by a user;
   sending, by the mobile terminal, the account and the login password to the combination lock through a network by using a pre-allocated network address, wherein the account and the login password are pre-allocated by the combination lock to the mobile terminal;
receiving, by the mobile terminal, prompt information for inputting an unlock password sent by the combination lock;
receiving, by the mobile terminal, the unlock password entered by the user; and
sending, by the mobile terminal, the unlock password to a combination lock through the network.

In another aspect, a combination lock is further provided, including:
a receiving module (11), configured to receive an account and a login password sent by a mobile terminal through a network by using a pre-allocated network address and receive an unlock password that is sent by the mobile terminal through the network;
a matching module, configured to match the unlock password with an unlock password preset for the mobile terminal; and
a controlling module, configured to pre-allocate the network address to the mobile terminal send prompt information for inputting the unlock password to the mobile terminal when the account and the login password match the account and the login password pre-allocated to the mobile terminal and execute an unlock operation when the unlock password matches the unlock password preset for the mobile terminal.

In another aspect, a mobile terminal is further provided, including:
a receiving module, configured to receive a network address which is pre-allocated by a combination lock to the mobile terminal, receive an account and a login password entered by a user, receive prompt information for inputting an unlock password sent by the combination lock and receive the unlock password entered by the user; and
a sending module, configured to send the account and the login password to the combination lock through a network by using the pre-allocated network address, where the account and the login password are pre-allocated by the combination lock to the mobile terminal and send the unlock password to the combination lock through the network.

In another aspect, a system of at least one combination lock and at least one mobile terminal is further provided, including the foregoing combination lock and the foregoing mobile terminal.

According to the foregoing technical solutions in embodiments of the present invention, a user enters an unlock password through a mobile terminal, and the mobile terminal sends the unlock password to a combination lock through a network, so as to implement an unlock operation. The mobile terminal acts as a password input apparatus and is independent of the combination lock. In addition, the mobile terminal is exclusively owned by a user and is not easily peeped, and can be always carried by the user. Embodiments of the present invention enhance the security of entering passwords when compared with the password input apparatuses adopted by combination lock systems in prior art that have the following problems: Most of the apparatuses are exposed, so that passwords are easily peeped; after the apparatuses are used, there are tracks, which are easily recorded and cracked, resulting in the relatively low security of entering passwords.

### BRIEF DESCRIPTION OF THE DRAWINGS

To describe the technical solutions in the embodiments of the present invention more clearly, the following briefly introduces the accompanying drawings required for describing the embodiments. Apparently, the accompanying drawings in the following descriptions merely show some embodiments of the present invention, and persons of ordinary skill in the art may still derive other drawings from the accompanying drawings without creative efforts.
FIG. 1 is a flowchart of a method for password control according to an embodiment of the present invention;
FIG. 2 is a flowchart of another method for password control according to an embodiment of the present invention;
FIG. 3 is a flowchart of a method for password control according to another embodiment of the present invention;
FIG. 4 is a structural diagram of a combination lock according to an embodiment of the present invention;
FIG. 5 is a structural diagram of another combination lock according to an embodiment of the present invention;
FIG. 6 is a structural diagram of a mobile terminal according to an embodiment of the present invention; and
FIG. 7 is a structural diagram of a combination lock system according to an embodiment of the present invention.

### DETAILED DESCRIPTION OF THE EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

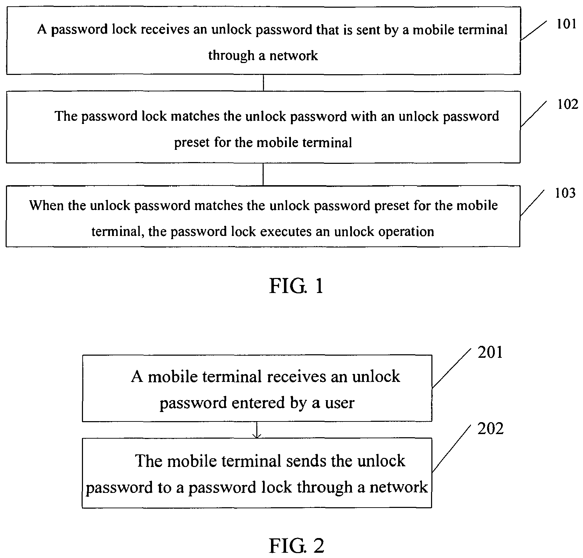

As shown in FIG. 1, an embodiment of the present invention provides a method for password control executed by a combination lock. The method includes the following:
101. A combination lock receives an unlock password that is sent by a mobile terminal through a network.

The network may be a wired network or a wireless network.

The unlock password may be formed by any type of numbers, letters, handwriting fonts, pictures, and fingerprints, or a combination of several types therein. The length of the unlock password may be set by a user according to actual needs, so as to reduce the easiness in cracking the password and enhance the security of the password. For details about the coding mode of the unlock password in the present invention, reference may be made to the password coding modes in prior art.

102. The combination lock matches the unlock password with an unlock password preset for the mobile terminal.

103. When the unlock password matches the unlock password preset for the mobile terminal, the combination lock executes an unlock operation.

Accordingly, as shown in FIG. 2, an embodiment of the present invention provides a method for password control, including the following:
201. A mobile terminal receives an unlock password entered by a user.

The unlock password may be formed by any type of numbers, letters, handwriting fonts, pictures, and fingerprints, or a combination of several types therein. The length of the unlock password may be set by the user according to actual needs.

202. The mobile terminal sends the unlock password to a combination lock through a network.

The mobile terminal sends, by using its own WIFI module or Bluetooth module, the unlock password to the combination lock through a wireless network.

Or, the mobile terminal accesses a wired network interface provided by the combination lock, and sends the unlock password to the combination lock through a wired network.

According to the technical solutions in the embodiment of the present invention, a user enters an unlock password through a mobile terminal, and the mobile terminal sends the unlock password to a combination lock, so as to implement an unlock operation. The mobile terminal acts as a password input apparatus and is independent of the combination lock. In addition, the mobile terminal is exclusively owned by a user and is not easily peeped, and can be always carried by the user. The embodiment of the present invention enhances the security of entering passwords when compared with the password input apparatuses adopted by combination lock systems in prior art that have the following problems: Most of the apparatuses are exposed, so that passwords are easily peeped; after the apparatuses are used, there are tracks, which are easily recorded and cracked, resulting in the relatively low security of entering passwords.

It should be noted that, to further enhance the security of entering passwords, only a switch for starting the system of the combination lock and a camera may be arranged outside the combination lock, without arranging any password input area. When the switch is turned on, the system of the combination lock performs initialization, and the camera begins to work and collect monitored videos. Meanwhile, a wireless network is also enabled. Of course, a password input area may also be arranged outside the combination lock, so that when the mobile terminal carried by the user cannot work normally, the user can also enter an unlock password through the password input area, which is not specifically limited by the present invention.

In this embodiment, the network used when the combination lock performs data communication with the mobile terminal includes the following types:

### 1. Wired network

The combination lock communicates with the mobile terminal through the wired network. Interfaces that the combination lock provides for the mobile terminal to use the wired network include a USB (universal serial bus, Universal Serial BUS) interface or a network cable interface.

Accordingly, when the user enters the password by using the mobile terminal, the user connects the mobile terminal to the wired network interface provided by the combination lock, so that the mobile terminal communicates with the combination lock through the wired network.

### 2. Wireless network

The combination lock communicates with the mobile terminal through the wireless network. The combination lock includes the following modules configured to provide the wireless network: a WIFI (Wireless Fidelity, wireless fidelity) module or a Bluetooth module.

Accordingly, when the user enters the password by using the mobile terminal, the user enables a wireless network module of the mobile terminal, and communicates with the combination lock through the wireless network, where the wireless network module includes a WIFI module or a Bluetooth module.

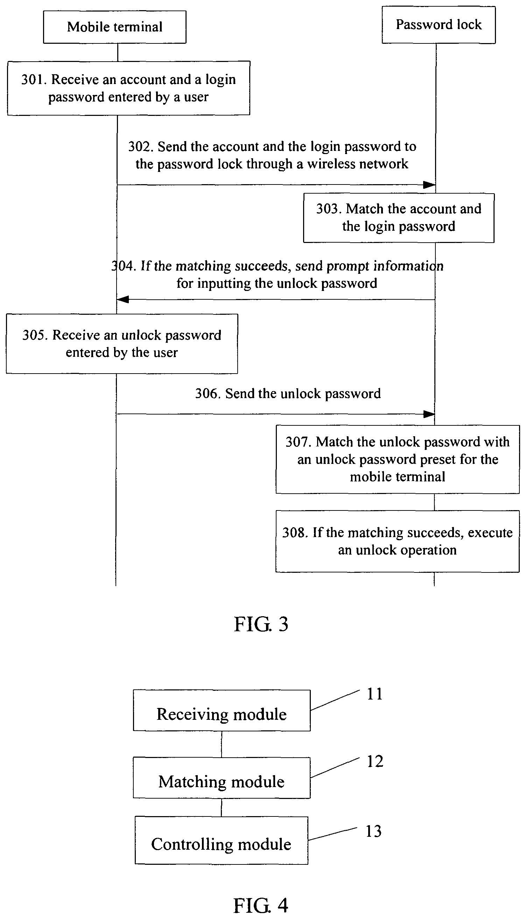

To make the present invention more comprehensible, the following provides another embodiment by taking an example that a combination lock communicates with a mobile terminal through a wireless network. The mobile terminal refers to a terminal that has a wireless network module and is able to perform wireless communication, where the wireless network module includes, but is not limited to, a WIFI module or a Bluetooth module. The mobile terminal includes a handset, an MP4 player, and a tablet computer. As shown in FIG. 3, the method includes the following:
301. The mobile terminal receives an account and a login password entered by a user.

In specific applications, the user enables a WIFI module on a handset to search for a wireless network provided by the combination lock, and prompt information for inputting an account and a login password may be displayed on the handset. At this time, after the user enters an account and a login password on the handset, the handset can receive the account and the login password entered by the user.

302. The mobile terminal sends the account and the login password to the combination lock through the wireless network.

For example, the mobile terminal sends, by using a pre-allocated network address, the account and the login password to the combination lock through the wireless network.

The network address is pre-allocated by the combination lock to the mobile terminal. The mobile terminal may log in successfully by using the network address that is pre-allocated by the combination lock to the mobile terminal. The mobile terminal cannot log in when using an address other than the pre-allocated network address, for example, a dynamically allocated address. Therefore, a new protection layer is added for entering the unlock password subsequently, which can further ensure the security of entering the unlock password.

It should be noted that in the embodiment of the present invention, the account and login password are pre-allocated by the combination lock, which makes it convenient to control the security of the account. Compared with the prior art where the user obtains the account and login password through application and registration, this embodiment further guarantees the security of logging in to the combination lock. Of course, in the present invention, the user may also obtain the account and login password through application and registration, which is not limited herein.

303. After receiving the account and the login password that are sent by the mobile terminal through the wireless network, the combination lock performs matching for the account and the login password.

304. When the account and the login password match an account and a login password pre-allocated by the combination lock to the mobile terminal, the combination lock sends prompt information for inputting the unlock password to the mobile terminal.

305. After receiving prompt information for inputting the unlock password sent by the combination lock, the mobile terminal receives an unlock password entered by the user.

Specifically, when the mobile terminal receives prompt information for inputting the unlock password, it may display the prompt information by using a real-time password input interface of a combination lock system, or by using a short message, or by other ways.

The unlock password may be formed by any type of numbers, letters, handwriting fonts, pictures, and fingerprints, or a combination of several types therein. The length of the unlock password may be set by the user according to actual needs.

306. The mobile terminal sends the unlock password to the combination lock through the wireless network.

For example, the mobile terminal sends, by using its own WIFI module or Bluetooth module, the unlock password to the combination lock through the wireless network.

307. After receiving the unlock password that is sent by the mobile terminal through the wireless network, the combination lock matches the unlock password with an unlock password preset for the mobile terminal.

308. When the unlock password matches the unlock password preset for the mobile terminal, the combination lock executes an unlock operation. For example, the combination lock may control a relay to execute the unlock operation.

After the user opens a combination lock and finishes an operation, a lock door is closed, and the system of the combination lock is closed by using a switch outside the combination lock.

It should be noted that performing matching for the account and the login password in the step 303 is specifically as follows: When the account and the login password do not match an account and a login password pre-allocated by the combination lock to the mobile terminal, an error tolerance counter in the combination lock begins to count. When the count of the error tolerance counter in the combination lock reaches a preset threshold, the combination lock closes its own system, and disconnects the wireless network.

The matching the unlock password in step 307 is specifically as follows: When the unlock password does not match an unlock password preset for the mobile terminal, the error tolerance counter in the combination lock begins to count. When the count of the error tolerance counter in the combination lock reaches a preset threshold, the combination lock closes its own system, and disconnects the wireless network.

Accordingly, as shown in FIG. 4, another embodiment of the present invention provides a combination lock, including:
a receiving module 11, configured to receive an unlock password that is sent by a mobile terminal through a network;
a matching module 12, configured to match the unlock password with an unlock password preset for the mobile terminal; and
a controlling module 13, configured to execute an unlock operation when the unlock password matches the unlock password preset for the mobile terminal.

In this embodiment, the combination lock receives an unlock password from the mobile terminal, so as to implement the unlock operation. The mobile terminal acts as a password input apparatus and is independent of the combination lock. In addition, the mobile terminal is exclusively owned by a user and is not easily peeped, and can be always carried by the user. The embodiment of the present invention enhances the security of entering passwords when compared with the password input apparatuses adopted by combination lock systems in prior art that have the following problems: Most of the apparatuses are exposed, so that passwords are easily peeped; after the apparatuses are used, there are tracks, which are easily recorded and cracked, resulting in the relatively low security of entering passwords.

Specifically, before the combination lock receives the unlock password that is sent by the mobile terminal through the network, the receiving module 11 is further configured to receive an account and a login password sent by the mobile terminal through the network.

The controlling module 13 is further configured to send prompt information for inputting the unlock password to the mobile terminal when the account and the login password match the account and the login password pre-allocated by the combination lock to the mobile terminal.

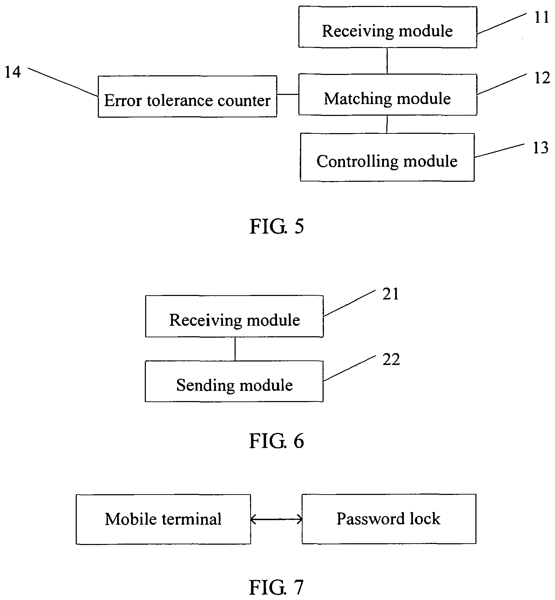

As shown in FIG. 5, the combination lock further includes:
an error tolerance counter 14, configured to: when the unlock password does not match the unlock password preset for the mobile terminal or when the account and the login password do not match the account and the login password pre-allocated by the combination lock to the mobile terminal, begin to count; where
the controlling module is further configured to: when the count of the error tolerance counter in the combination lock reaches a preset threshold, close a system of the combination lock, and disconnect the network.

Optionally, the combination lock further includes: a wired network interface module, configured to communicate with the mobile terminal through a wired network, where the wired network interface module includes a USB interface or a network cable interface.

Optionally, the combination lock further includes: a wireless network module, configured to communicate with the mobile terminal through a wireless network, where the wireless network module includes a WIFI module or a Bluetooth module.

As shown in FIG. 6, another embodiment of the present invention further provides a mobile terminal, including:
a receiving module 21, configured to receive an unlock password entered by a user; and
a sending module 22, configured to send the unlock password to a combination lock through a network.

In this embodiment, a user enters an unlock password through a mobile terminal, and the mobile terminal sends the unlock password to a combination lock, so as to implement an unlock operation. The mobile terminal acts as a password input apparatus and is independent of the combination lock. In addition, the mobile terminal is exclusively owned by a user and is not easily peeped, and can be always carried by the user. The embodiment of the present invention enhances the security of entering passwords when compared with the password input apparatuses adopted by combination lock systems in prior art that have the following problems: Most of the apparatuses are exposed, so that passwords are easily peeped; after the apparatuses are used, there are tracks, which are easily recorded and cracked, resulting in the relatively low security of entering passwords.

Specifically, before the mobile terminal sends the unlock password to the combination lock through the network, the receiving module 21 is further configured to receive an account and a login password entered by the user.

The sending module 22 is further configured to send the account and the login password to the combination lock through a wireless network, where the account and the login password are pre-allocated by the combination lock to the mobile terminal.

The receiving module 21 is further configured to receive prompt information for inputting the unlock password sent by the combination lock.

Optionally, the mobile terminal further includes: a wired network interface module adaptable to wired network interfaces provided by the combination lock, configured to communicate with the combination lock through a wired network, where the wired network interface module includes a USB interface or a network cable interface.

Optionally, the mobile terminal further includes: a wireless network module, configured to communicate with the combination lock through a wireless network, where the wireless network module includes a WIFI module or a Bluetooth module.

As shown in FIG. 7, an embodiment of the present invention further provides a combination lock system, including the combination lock illustrated in FIG. 4 or FIG. 5 and the mobile terminal illustrated in FIG. 6.

The foregoing descriptions are merely specific embodiments of the present invention, but are not intended to limit the protection scope of the present invention. Any variation or replacement readily figured out by persons skilled in the art within the technical scope disclosed in the present invention shall all fall within the protection scope of the present invention. Therefore, the protection scope of the present invention shall be subject to the protection scope of the claims.

## Claims

1. A method for password control, comprising:
pre-allocating, by a combination lock, a network address to a mobile terminal;
receiving, by the combination lock, an account and a login password sent by the mobile terminal through a network by using the pre-allocated network address;
when the account and the login password match an account and a login password pre-allocated to the mobile terminal, sending (304), by the combination lock, prompt information for inputting an unlock password to the mobile terminal;
receiving, by the combination lock, the unlock password that is sent by the mobile terminal through the network;
matching (307), by the combination lock, the unlock password with an unlock password preset for the mobile terminal; and
when the unlock password matches the unlock password preset for the mobile terminal, executing (308), by the password, an unlock operation.

2. The method according to claim 1, wherein the network comprises:
a wired network, wherein interfaces that the combination lock provides for the mobile terminal to use the wired network comprise a universal serial bus USB interface or a network cable interface;
or
a wireless network, wherein the combination lock comprises the following modules configured to provide the wireless network: a wireless fidelity WIFI module or a Bluetooth module.

3. The method according to any one of claims 1 and 2, further comprising:
when the unlock password does not match the unlock password preset for the mobile terminal, counting by an error tolerance counter in the combination lock; and
when a count of the error tolerance counter in the combination lock reaches a preset threshold, closing, by the combination lock, a system of the combination lock, and disconnecting the network.

4. The method according to any one of claims 1 and 2, further comprising:
when the unlock password does not match the unlock password preset for the mobile terminal or when the account and the login password do not match the account and the login password pre-allocated to the mobile terminal, counting, by an error tolerance counter in the combination lock; and
when a count of the error tolerance counter in the combination lock reaches a preset threshold, closing, by the combination lock, a system of the combination lock, and disconnecting the network.

5. A method for password control, comprising:
receiving a network address which is pre-allocated by a combination lock to a mobile terminal;
receiving (301), by the mobile terminal, an account and a login password entered by a user;
sending (302), by the mobile terminal, the account and the login password to the combination lock through a network by using the pre-allocated network address, wherein the account and the login password are pre-allocated by the combination lock to the mobile terminal;
receiving, by the mobile terminal, prompt information for inputting an unlock password sent by the combination lock;
receiving (305), by the mobile terminal, the unlock password entered by the user; and
sending (306), by the mobile terminal, the unlock password to a combination lock through the network.

6. The method according to claim 5, wherein the network comprises:
a wired network, wherein interfaces used by the mobile terminal to access the wired network comprise a universal serial bus USB interface or a network cable interface;
or
a wireless network, wherein the mobile terminal comprises the following modules configured to access the wireless network: a wireless fidelity WIFI module or a Bluetooth module.

7. A combination lock, comprising:
a receiving module (11), configured to receive an account and a login password sent by a mobile terminal through a network by using a pre-allocated network address and receive an unlock password that is sent by the mobile terminal through the network;
a matching module (12), configured to match the unlock password with an unlock password preset for the mobile terminal; and
a controlling module (13), configured to pre-allocate the network address to the mobile terminal send prompt information for inputting the unlock password to the mobile terminal when the account and the login password match the account and the login password pre-allocated to the mobile terminal and execute an unlock operation when the unlock password matches the unlock password preset for the mobile terminal.

8. The combination lock according to claim 7, further comprising:
a wired network interface module, configured to communicate with the mobile terminal through a wired network, wherein the wireless network interface module comprises a universal serial bus USB interface or a network cable interface;
or
a wireless network module, configured to communicate with the mobile terminal through a wireless network, wherein the wireless network module comprises a wireless fidelity WIFI module or a Bluetooth module.

9. The combination lock according to any one of claims 7 and 8, further comprising:
an error tolerance counter, configured to: when the unlock password does not match the unlock password preset for the mobile terminal, perform counting; wherein
the controlling module is further configured to: when a count of the error tolerance counter reaches a preset threshold, close a system of the combination lock, and disconnect the network.

10. The combination lock according to any one of claims 7 and 8, further comprising:
an error tolerance counter, configured to: when the unlock password does not match the unlock password preset for the mobile terminal or when the account and the login password do not match the account and the login password pre-allocated by the combination lock to the mobile terminal, perform counting; wherein
the controlling module is further configured to: when a count of the error tolerance counter reaches a preset threshold, close a system of the combination lock, and disconnect the network.

11. A mobile terminal, comprising:
a receiving module (21), configured to receive a network address which is pre-allocated by a combination lock to the mobile terminal, receive an account and a login password entered by a user, receive prompt information for inputting an unlock password sent by the combination lock and receive the unlock password entered by the user; and
a sending module (22), configured to send the account and the login password to the combination lock through a network by using the pre-allocated network address, where the account and the login password are pre-allocated by the combination lock to the mobile terminal and send the unlock password to the combination lock through the network.

12. The mobile terminal according to claim 11, further comprising:
a wired network interface module adaptable to wired network interfaces provided by the combination lock, configured to communicate with the combination lock through a wired network, wherein the wired network interface module comprises a universal serial bus USB interface or a network cable interface;
or
a wireless network module, configured to communicate with the mobile terminal through a wireless network, wherein the wireless network module comprises a wireless fidelity WIFI module or a Bluetooth module.

13. A system comprising a combination lock according to any one of claims 7 to 10 and a mobile terminal according to any one of claims 11 and 12.

## Patentansprüche

1. Verfahren zur Passwortsteuerung, das Folgendes umfasst:
Vorbelegen durch ein Kombinationsschloss einer Netzadresse für ein mobiles Endgerät;
Empfangen durch das Kombinationsschloss eines Kontos und eines Login-Passworts, die durch das mobile Endgerät über ein Netz unter Verwendung der vorbelegten Netzadresse gesendet werden;
wenn das Konto und das Login-Passwort mit einem Konto und einem Anmeldepasswort, die für das mobile Endgerät vorbelegt sind, übereinstimmen, Senden (304) durch das Kombinationsschloss von Aufforderungsinformationen zum Eingeben eines Entsperrpassworts zu dem mobilen Endgerät;
Empfangen durch das Kombinationsschloss des Entsperrpassworts, das durch das mobile Endgerät über das Netz gesendet wird;
Abgleichen (307) durch das Kombinationsschloss des Entsperrpassworts mit einem für das mobile Endgerät voreingestellten Entsperrpasswort; und
wenn das Entsperrpasswort mit dem für das mobile Endgerät voreingestellten Entsperrpasswort übereinstimmt, Ausführen (308) einer Entsperroperation durch das Passwort.

2. Verfahren nach Anspruch 1, wobei das Netz Folgendes umfasst:
ein drahtgebundenes Netz, wobei Schnittstellen, die das Kombinationsschloss für das mobile Endgerät bereitstellt, um das drahtgebundene Netz zu verwenden, eine Schnittstelle über den universellen seriellen Bus, USB-Schnittstelle, oder eine Netzkabelschnittstelle umfassen;
oder
ein drahtloses Netz, wobei das Kombinationsschloss die folgenden Module umfasst, die konfiguriert sind, das drahtlose Netz bereitzustellen: ein "Wireless Fidelity"-Modul, WIFI-Modul, oder ein Bluetooth-Modul.

3. Verfahren nach einem der Ansprüche 1 und 2, das ferner Folgendes umfasst:
wenn das Entsperrpasswort nicht mit dem für das mobile Endgerät voreingestellten Entsperrpasswort übereinstimmt, Zählen durch einen Fehlertoleranzzähler in dem Kombinationsschloss; und
wenn ein Zählwert des Fehlertoleranzzählers in dem Kombinationsschloss einen voreingestellten Schwellenwert erreicht, Schließen durch das Kombinationsschloss eines Systems des Kombinationsschlosses und Trennen des Netzes.

4. Verfahren nach einem der Ansprüche 1 und 2, das ferner Folgendes umfasst:
wenn das Entsperrpasswort nicht mit dem für das mobile Endgerät voreingestellten Entsperrpasswort übereinstimmt oder wenn das Konto und das Login-Passwort nicht mit dem Konto und dem Login-Passwort, die für das mobile Endgerät vorbelegt sind, übereinstimmen, Zählen durch einen Fehlertoleranzzähler in dem Kombinationsschloss; und
wenn ein Zählwert des Fehlertoleranzzählers in dem Kombinationsschloss einen voreingestellten Schwellenwert erreicht, Schließen durch das Kombinationsschloss eines Systems des Kombinationsschlosses und Trennen des Netzes.

5. Verfahren zur Passwortsteuerung, das Folgendes umfasst:
Empfangen einer Netzadresse, die durch ein Kombinationsschloss für ein mobiles Endgerät vorbelegt ist;
Empfangen (301) durch das mobile Endgerät eines Kontos und eines Login-Passworts, die durch einen Anwender eingegeben sind;
Senden (302) durch das mobile Endgerät des Kontos und des Login-Passworts zu dem Kombinationsschloss über ein Netz unter Verwendung der vorbelegten Netzadresse, wobei das Konto und das Login-Passwort durch das Kombinationsschloss für das mobile Endgerät vorbelegt sind;
Empfangen durch das mobile Endgerät von Aufforderungsinformationen zum Eingeben eines Entsperrpassworts, die durch das Kombinationsschloss gesendet werden;
Empfangen (305) durch das mobile Endgerät des Entsperrpassworts, das durch den Anwender eingegeben wird; und
Senden (306) durch das mobile Endgerät des Entsperrpassworts über das Netz zu einem Kombinationsschloss.

6. Verfahren nach Anspruch 5, wobei das Netz Folgendes umfasst:
ein drahtgebundenes Netz, wobei Schnittstellen, die durch das mobile Endgerät verwendet werden, um auf das drahtgebundene Netz zuzugreifen, eine Schnittstelle über den universellen seriellen Bus, USB-Schnittstelle, oder eine Netzkabelschnittstelle umfassen;
oder
ein drahtloses Netz, wobei das mobile Endgerät die folgenden Module umfasst, die konfiguriert sind, um auf das drahtlose Netz zuzugreifen: ein "Wireless Fidelity"-Modul, WIFI-Modul, oder ein Bluetooth-Modul.

7. Kombinationsschloss, das Folgendes umfasst:
ein Empfangsmodul (11), das konfiguriert ist, ein Konto und ein Login-Passwort zu empfangen, die durch ein mobiles Endgerät über ein Netz unter Verwendung einer vorbelegten Netzadresse gesendet werden, und ein Entsperrpasswort zu empfangen, das durch das mobile Endgerät über das Netz gesendet wird;
ein Abgleichmodul (12), das konfiguriert ist, das Entsperrpasswort mit einem für das mobile Endgerät voreingestellten Entsperrpasswort abzugleichen; und
ein Steuermodul (13), das konfiguriert ist, die Netzadresse für das mobile Endgerät vorzubelegen, Aufforderungsinformationen zum Eingeben des Entsperrpassworts zu dem mobilen Endgerät zu senden, wenn das Konto und das Login-Passwort mit dem Konto und dem Login-Passwort übereinstimmen, die für das mobile Endgerät vorbelegt sind, und eine Entsperroperation auszuführen, wenn das Entsperrpasswort mit dem für das mobile Endgerät voreingestellten Entsperrpasswort übereinstimmt.

8. Kombinationsschloss nach Anspruch 7, das ferner Folgendes umfasst:
ein drahtgebundenes Netzschnittstellenmodul, das konfiguriert ist, mit dem mobilen Endgerät über ein drahtgebundenes Netz zu kommunizieren, wobei das drahtlose Netzschnittstellenmodul eine Schnittstelle über den universellen seriellen Bus, USB-Schnittstelle, oder eine Netzkabelschnittstelle umfasst;
oder
ein drahtloses Netzmodul, das konfiguriert ist, mit dem mobilen Endgerät über ein drahtloses Netz zu kommunizieren, wobei das drahtlose Netzmodul ein "Wireless Fidelity"-Modul, WIFI-Modul, oder ein Bluetooth-Modul umfasst.

9. Kombinationsschloss nach einem der Ansprüche 7 und 8, das ferner Folgendes umfasst:
einen Fehlertoleranzzähler, der konfiguriert ist: wenn das Entsperrpasswort nicht mit dem für das mobile Endgerät voreingestellten Entsperrpasswort übereinstimmt, Zählen auszuführen; wobei
das Steuermodul ferner konfiguriert ist: wenn ein Zählwert des Fehlertoleranzzählers einen voreingestellten Schwellenwert erreicht, ein System des Kombinationsschlosses zu schließen und das Netz zu trennen.

10. Kombinationsschloss nach einem der Ansprüche 7 und 8, das ferner Folgendes umfasst:
einen Fehlertoleranzzähler, der konfiguriert ist: wenn das Entsperrpasswort nicht mit dem für das mobile Endgerät voreingestellten Entsperrpasswort übereinstimmt oder wenn das Konto und das Login-Passwort nicht mit dem Konto und dem Login-Passwort übereinstimmen, die durch das Kombinationsschloss für das mobile Endgerät vorbelegt sind, Zählen auszuführen; wobei
das Steuermodul ferner konfiguriert ist: wenn ein Zählwert des Fehlertoleranzzählers einen voreingestellten Schwellenwert erreicht, ein System des Kombinationsschlosses zu schließen und das Netz zu trennen.

11. Mobiles Endgerät, das Folgendes umfasst:
ein Empfangsmodul (21), das konfiguriert ist, eine Netzadresse zu empfangen, die durch ein Kombinationsschloss für das mobile Endgerät vorbelegt ist, ein Konto und ein Login-Passwort zu empfangen, die durch einen Anwender eingegeben werden, Aufforderungsinformationen zum Eingeben eines Entsperrpassworts, die durch das Kombinationsschloss gesendet werden, zu empfangen und das durch den Anwender eingegebene Entsperrpasswort zu empfangen; und
ein Sendemodul (22), das konfiguriert ist, das Konto und das Login-Passwort zu dem Kombinationsschloss über ein Netz unter Verwendung der vorbelegten Netzadresse zu senden, wobei das Konto und das Login-Passwort durch das Kombinationsschloss für das mobile Endgerät vorbelegt sind, und das Entsperrpasswort über das Netz zu dem Kombinationsschloss zu senden.

12. Mobiles Endgerät nach Anspruch 11, das ferner Folgendes umfasst:
ein drahtgebundenes Netzschnittstellenmodul, das an drahtgebundene Netzschnittstellen, die durch das Kombinationsschloss bereitgestellt sind, anpassbar ist, das konfiguriert ist, mit dem Kombinationsschloss über ein drahtgebundenes Netz zu kommunizieren, wobei das drahtgebundene Netzschnittstellenmodul eine Schnittstelle über den universellen seriellen Bus, USB-Schnittstelle, oder eine Netzkabelschnittstelle umfasst;
oder
ein drahtloses Netzmodul, das konfiguriert ist, mit dem mobilen Endgerät über ein drahtloses Netz zu kommunizieren, wobei das drahtlose Netzmodul ein "Wireless Fidelity"-Modul, WIFI-Modul, oder ein Bluetooth-Modul umfasst.

13. System, das ein Kombinationsschloss nach einem der Ansprüche 7 bis 10 und ein mobiles Endgerät nach einem der Ansprüche 11 und 12 umfasst.

## Revendications

1. Procédé de contrôle de mot de passe, comprenant les étapes consistant à :
pré-attribuer, par un verrouillage de combinaison, une adresse de réseau à un terminal mobile ;
recevoir, par le verrouillage de combinaison, un compte et un mot de passe de connexion envoyés par le terminal mobile par le biais d'un réseau à l'aide de l'adresse de réseau pré-attribuée ;
lorsque le compte et le mot de passe de connexion correspondent à un compte et à un mot de passe de connexion pré-attribués au terminal mobile, envoyer (304), par le verrouillage de combinaison, des informations d'invite pour entrer un mot de passe de déverrouillage dans le terminal mobile ;
recevoir, par le verrouillage de combinaison, le mot de passe de déverrouillage qui est envoyé par le terminal mobile par le biais du réseau ;
faire correspondre (307), par le verrouillage de combinaison, le mot de passe de déverrouillage à un mot de passe de déverrouillage prédéfini pour le terminal mobile ; et
lorsque le mot de passe de déverrouillage correspond au mot de passe de déverrouillage prédéfini pour le terminal mobile, exécuter (308), par le mot de passe, une opération de déverrouillage.

2. Procédé selon la revendication 1, dans lequel le réseau comprend :
un réseau câblé, dans lequel des interfaces, que le verrouillage de combinaison fournit au terminal mobile pour utiliser le réseau câblé, comprennent une interface de bus série universel USB ou une interface de câble de réseau ;
ou
un réseau sans fil, dans lequel le verrouillage de combinaison comprend les modules suivants conçus pour fournir le réseau sans fil : un module de fidélité sans fil WIFI ou un module Bluetooth.

3. Procédé selon l'une quelconque des revendications 1 et 2, comprenant en outre :
lorsque le mot de passe de déverrouillage ne correspond pas au mot de passe de déverrouillage prédéfini pour le terminal mobile, compter grâce à un compteur de tolérance aux erreurs dans le verrouillage de combinaison ; et
lorsqu'un compte du compteur de tolérance aux erreurs dans le verrouillage de combinaison atteint un seuil prédéfini, fermer, grâce au verrouillage de combinaison, un système du verrouillage de combinaison, et déconnecter le réseau.

4. Procédé selon l'une quelconque des revendications 1 et 2, comprenant en outre les étapes consistant à :
lorsque le mot de passe de déverrouillage ne correspond pas au mot de passe de déverrouillage prédéfini pour le terminal mobile ou lorsque le compte et le mot de passe de connexion ne correspondent pas au compte et au mot de passe de connexion pré-attribués au terminal mobile, compter, par un compteur de tolérance aux erreurs dans le verrouillage de combinaison ; et
lorsqu'un compte du compteur de tolérance aux erreurs dans le verrouillage de combinaison atteint un seuil prédéfini, fermer, par le verrouillage de combinaison, un système du verrouillage de combinaison, et déconnecter le réseau.

5. Procédé de contrôle de mot de passe, comprenant les étapes consistant à :
recevoir une adresse de réseau qui est pré-attribuée par un verrouillage de combinaison à un terminal mobile ;
recevoir (301), par le terminal mobile, un compte et un mot de passe de connexion entrés par un utilisateur ;
envoyer (302), par le terminal mobile, le compte et le mot de passe de connexion au verrouillage de combinaison par le biais d'un réseau à l'aide de l'adresse de réseau pré-attribuée, dans lequel le compte et le mot de passe de connexion sont pré-attribués par le verrouillage de combinaison au terminal mobile ;
recevoir, par le terminal mobile, des informations d'invite pour entrer un mot de passe de déverrouillage envoyé par le verrouillage de combinaison ;
recevoir (305), par le terminal mobile, le mot de passe de déverrouillage entré par l'utilisateur ; et
envoyer (306), par le terminal mobile, le mot de passe de déverrouillage à un verrouillage de combinaison par le biais du réseau.

6. Procédé selon la revendication 5, dans lequel le réseau comprend :
un réseau câblé, dans lequel des interfaces utilisées par le terminal mobile pour accéder au réseau câblé comprennent une interface de bus série universel USB ou une interface de câble de réseau ;
ou
un réseau sans fil, dans lequel le terminal mobile comprend les modules suivants conçus pour accéder au réseau sans fil : un module de fidélité sans fil WIFI ou un module Bluetooth.

7. Verrouillage de combinaison, comprenant :
un module de réception (11), conçu pour recevoir un compte et un mot de passe de connexion envoyés par un terminal mobile par le biais d'un réseau à l'aide d'une adresse de réseau pré-attribuée, et pour recevoir un mot de passe de déverrouillage qui est envoyé par le terminal mobile par le biais du réseau ;
un module de correspondance (12), conçu pour faire correspondre le mot de passe de déverrouillage à un mot de passe de déverrouillage prédéfini pour le terminal mobile ; et
un module de contrôle (13), conçu pour pré-attribuer l'adresse de réseau au terminal mobile, envoyer des informations d'invite pour entrer le mot de passe de déverrouillage sur le terminal mobile lorsque le compte et le mot de passe de connexion correspondent au compte et au mot de passe de connexion pré-attribués au terminal mobile, et pour exécuter une opération de déverrouillage lorsque le mot de passe de déverrouillage correspond au mot de passe de déverrouillage prédéfini pour le terminal mobile.

8. Verrouillage de combinaison selon la revendication 7, comprenant en outre :
un module d'interface de réseau câblé, conçu pour communiquer avec le terminal mobile par le biais d'un réseau câblé, dans lequel le module d'interface de réseau sans fil comprend une interface de bus série universel USB ou une interface de câble de réseau ;
ou
un module de réseau sans fil, conçu pour communiquer avec le terminal mobile par le biais d'un réseau sans fil, dans lequel le module de réseau sans fil comprend un module de fidélité sans fil WIFI ou un module Bluetooth.

9. Verrouillage de combinaison selon l'une quelconque des revendications 7 et 8, comprenant en outre :
un compteur de tolérance aux erreurs, conçu pour : lorsque le mot de passe de déverrouillage ne correspond pas au mot de passe de déverrouillage prédéfini pour le terminal mobile, effectuer un comptage ; dans lequel :
le module de contrôle est conçu en outre pour : lorsqu'un compte du compteur de tolérance aux erreurs atteint un seuil prédéfini, fermer un système du verrouillage de combinaison, et déconnecter le réseau.

10. Verrouillage de combinaison selon l'une quelconque des revendications 7 et 8, comprenant en outre :
un compteur de tolérance aux erreurs, conçu pour : lorsque le mot de passe de déverrouillage ne correspond pas au mot de passe de déverrouillage prédéfini pour le terminal mobile ou lorsque le compte et le mot de passe de connexion ne correspondent pas au compte et au mot de passe de connexion pré-attribués par le verrouillage de combinaison au terminal mobile, effectuer un comptage ; dans lequel :
le module de contrôle est conçu en outre pour : lorsqu'un compte du compteur de tolérance aux erreurs atteint un seuil prédéfini, fermer un système du verrouillage de combinaison, et déconnecter le réseau.

11. Terminal mobile, comprenant :
un module de réception (21), conçu pour recevoir une adresse de réseau qui est pré-attribuée par un verrouillage de combinaison au terminal mobile, recevoir un compte et un mot de passe de connexion entrés par un utilisateur, recevoir des informations d'invite pour entrer un mot de passe de déverrouillage envoyé par le verrouillage de combinaison et recevoir le mot de passe de déverrouillage entré par l'utilisateur ; et
un module d'envoi (22), conçu pour envoyer le compte et le mot de passe de connexion au verrouillage de combinaison par le biais d'un réseau à l'aide de l'adresse de réseau pré-attribuée, où le compte et le mot de passe de connexion sont pré-attribués par le verrouillage de combinaison au terminal mobile, et pour envoyer le mot de passe de déverrouillage au verrouillage de combinaison par le biais du réseau.

12. Terminal mobile selon la revendication 11, comprenant en outre :
un module d'interface de réseau câblé adaptable à des interfaces de réseau câblé fourni par le verrouillage de combinaison, conçu pour communiquer avec le verrouillage de combinaison par le biais d'un réseau câblé, dans lequel le module d'interface de réseau câblé comprend une interface de bus série universel USB ou une interface de câble de réseau ;
ou
un module de réseau sans fil, conçu pour communiquer avec le terminal mobile par le biais d'un réseau sans fil, dans lequel le module de réseau sans fil comprend un module de fidélité sans fil WIFI ou un module Bluetooth.

13. Système comprenant un verrouillage de combinaison selon l'une quelconque des revendications 7 à 10 et un terminal mobile selon l'une quelconque des revendications 11 et 12.
